# EUROPEAN PATENT SPECIFICATION

(11) **EP 1 559 214 B1**
(45) Date of publication and mention of the grant of the patent: **16.03.2011**
(21) Application number: 03810707.4
(22) Date of filing: 06.11.2003
(51) Int. Cl.: H04B 7/26, H04L 29/06

(54) **METHOD OF MULTIPLEXING LOGICAL CHANNELS IN MOBILE COMMUNICATION SYSTEM AND APPARATUS THEREOF**
VERFAHREN ZUM MULTIPLEXEN LOGISCHER KANÄLE IN EINEM MOBILKOMMUNIKATIONSSYSTEM UND VORRICHTUNG DAFÜR
PROCEDE DE MULTIPLEXAGE DES CANAUX LOGIQUES D'UN SYSTEME DE COMMUNICATION MOBILE ET APPAREIL CORRESPONDANT

(30) Priority: 07.11.2002 KR 2002068924
(43) Date of publication of application: 03.08.2005
(73) Proprietor: LG Electronics, Inc., Seoul 150-010 (KR)
(72) Inventor: YI, Seung-June, 135-240 Seoul (KR); LEE, Young-Dae, 465-711 Hanam, Gyeonggi-Do (KR); LEE, So-Young, 435-050 Gunpo, Gyeonggi-Do (KR)
(74) Representative: TER MEER - STEINMEISTER & PARTNER GbR
(86) International application number: PCT/KR2003/002366
(87) International publication number: WO 2004/042964

(56) References cited:
- EP-A- 1 148 687
- WO-A-2004/028041
- WO-A1-99/44313
- DE-A1- 10 107 700
- KR-A- 2001 026 301
- KR-A- 2002 079 453
- KR-A- 2003 029 310
- US-A1- 2002 080 737
- US-B1- 6 252 868

## Description

### TECHNICAL FIELD

The present invention relates to a mobile communication system, and more particularly, to a method of multiplexing logical channels and apparatus thereof.

### BACKGROUND ART

Recently, mobile communication systems have developed remarkably, but for high capacity data communication services, the performance of mobile communication systems cannot match that of existing wired communication systems. Accordingly, technical developments for IMT-2000, which is a communication system allowing high capacity data communications, are being made and standardization of such technology is being actively pursued among various companies and organizations.

A universal mobile telecommunication system (UMTS) is a third generation mobile communication system that has evolved from a European standard known as Global System for Mobile communications (GSM) that aims to provide an improved mobile communication service based upon a GSM core network and wideband code division multiple access (W-CDMA) wireless connection technology.

In December 1998, the ETSI of Europe, the ARIB/TTC of Japan, the T1 of the United States, and the TTA of Korea formed a Third Generation Partnership Project (3GPP), which is creating the detailed specifications of the UMTS technology.

Within the 3GPP, in order to achieve rapid and efficient technical development of the UMTS, five technical specification groups (TSG) have been created for performing the standardization of the UMTS by considering the independent nature of the network elements and their operations.

Each TSG develops, approves, and manages the standard specification within a related region. Among these groups, the radio access network (RAN) group (TSG-RAN) develops the standards for the functions, requirements, and interface of the UMTS terrestrial radio access network (UTRAN), which is a new radio access network for supporting W-CDMA access technology in the UMTS.

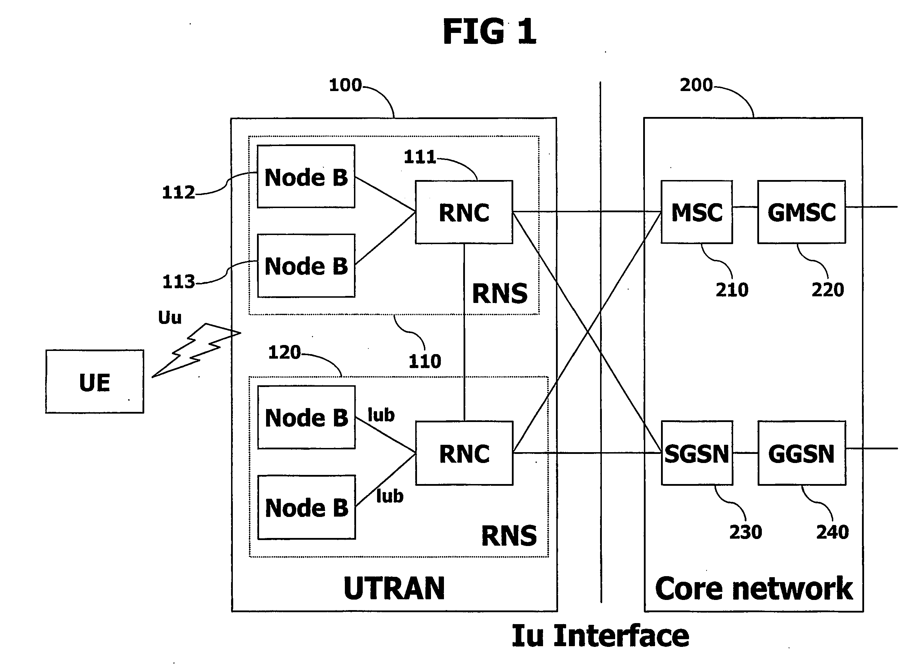

FIG. 1 illustrates an exemplary basic structure of a general UMTS network. As shown in FIG. 1, the UMTS is roughly divided into a terminal (or user equipment: UE), a UTRAN 100, and a core network (CN) 200.

The UTRAN 100 includes one or more radio network sub-systems (RNS) 110, 120. Each RNS 110, 120 includes a radio network controller (RNC) 111, and a plurality of Node-Bs 112, 113 managed by the RNC 111. The RNC 111 handles the assigning and managing of radio resources, and operates as an access point with respect to the core network 200.

The Node-Bs 112, 113 receive information sent by the physical layer of the terminal through an uplink, and transmit data to the terminal through a downlink. The Node-Bs 112, 113, thus, operate as access points of the UTRAN 100 for the terminal.

A primary function of the UTRAN 100 is forming and maintaining a radio access bearer (RAB) to allow communication between the terminal and the core network 200. The core network 200 applies end-to-end quality of service (QoS) requirements to the RAB, and the RAB supports the QoS requirements set by the core network 200. As the UTRAN 100 forms and maintains the RAB, the QoS requirements of end-to-end are satisfied. The RAB service can be further divided into an lu bearer service and a radio bearer service. The lu bearer service supports a reliable transmission of user data between boundary nodes of the UTRAN 100 and the core network 200.

The core network 200 includes a mobile switching center (MSC) 210 and a gateway mobile switching center (GMSC) 220 connected together for supporting a circuit switched (CS) service, and a serving GPRS support node (SGSN) 230 and a gateway GPRS support node 240 connected together for supporting a packet switched (PS) service.

The services provided to a specific terminal are roughly divided into the circuit switched (CS) services and the packet switched (PS) services. For example, a general voice conversation service is a circuit switched service, while a Web browsing service via an Internet connection is classified as a packet switched (PS) service.

For supporting circuit switched services, the RNCs 111 are connected to the MSC 210 of the core network 200, and the MSC 210 is connected to the GMSC 220 that manages the connection with other networks.

For supporting packet switched services, the RNCs 111 are connected to the SGSN 230 and the GGSN 240 of the core network 200. The SGSN 230 supports the packet communications going toward the RNCs 111, and the GGSN 240 manages the connection with other packet switched networks, such as the Internet.

Various types of interfaces exist between network components to allow the network components to transmit and receive information to and from each other for mutual communication therebetween. An interface between the RNC 111 and the core network 200 is defined as an lu interface. In particular, the lu interface between the RNCs 111 and the core network 200 for packet switched systems is defined as "lu-PS," and the lu interface between the RNCs 111 and the core network 200 for circuit switched systems is defined as "lu-CS."

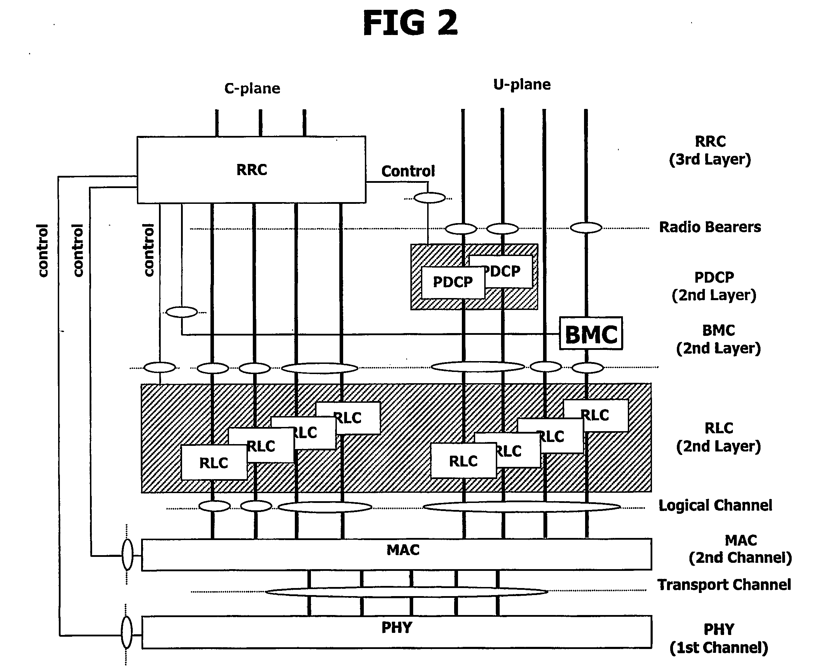

FIG. 2 illustrates a structure of a radio interface protocol between the terminal and the UTRAN according to the 3GPP radio access network standards.

As shown in Figure 2, the radio interface protocol has horizontal layers comprising a physical layer, a data link layer, and a network layer, and has vertical planes comprising a user plane (U-plane) for transmitting user data and a control plane (C-plane) for transmitting control information.

The user plane is a region that handles traffic information of the user, such as voice or Internet protocol (IP) packets, while the control plane is a region that handles control information for an interface of a network, maintenance and management of a call, and the like.

The protocol layers in Figure 2 can be divided into a first layer (L1), a second layer (L2), and a third layer (L3) based on the three lower layers of an open system interconnection (OSI) standard model. Each layer will be described in more detail as follows.

The first layer (L1), namely, the physical layer, provides an information transfer service to an upper layer by using various radio transmission techniques. The physical layer is connected to an upper layer called a medium access control (MAC) layer, via a transport channel. The MAC layer and the physical layer send and receive data with one another via the transport channel.

The second layer (L2) includes a MAC layer, a radio link control (RLC) layer, a broadcast/multicast control (BMC) layer, and a packet data convergence protocol (PDCP) layer.

The MAC layer provides an allocation service of the MAC parameters for allocation and re-allocation of radio resources. The MAC layer is connected to an upper layer called the radio link control (RLC) layer, via a logical channel.

Various logical channels are provided according to the kind of transmitted information. In general, when information of the control plane is transmitted, a control channel is used. When information of the user plane is transmitted, a traffic channel is used.

The MAC layer can be divided into a MAC-b sub-layer, a MAC-d sub-layer, a MAC-c/sh sub-layer, and a MAC-hs sub-layer according to the type of transport channel to be managed.

The MAC-b sub-layer manages a BCH (Broadcast Channel), which is a transport channel handling the broadcasting of system information.

The MAC-d sub-layer manages a dedicated channel (DCH), which is a dedicated transport channel for a specific terminal. Accordingly, the MAC-d sub-layer of the UTRAN is located in a serving radio network controller (SRNC) that manages a corresponding terminal, and one MAC-d sub-layer also exists within each terminal (UE).

The MAC-c/sh sub-layer manages a common transport channel, such as a forward access channel (FACH) or a downlink shared channel (DSCH), which is shared by a plurality of terminals. In the UTRAN, the MAC-c/sh sub-layer is located in a controlling radio network controller (CRNC). As the MAC-c/sh sub-layer manages the channel being shared by all terminals within a cell region, a single MAC-c/sh sub-layer exists for each cell region. Also, one MAC-c/sh sublayer exists in each terminal (UE).

The RLC layer supports reliable data transmissions, and performs a segmentation and concatenation function on a plurality of RLC service data units (RLC SDUs) delivered from an upper layer. When the RLC layer receives the RLC SDUs from the upper layer, the RLC layer adjusts the size of each RLC SDU in an appropriate manner upon considering processing capacity, and then creates certain data units with header information added thereto. The created data units are called protocol data units (PDUs), which are then transferred to the MAC layer via a logical channel. The RLC layer includes a RLC buffer for storing the RLC SDUs and/or the RLC PDUs.

The BMC layer schedules a cell broadcast message (referred to as a 'CB message', hereinafter) received from the core network, and broadcasts the CB messages to terminals located in a specific cell(s). The BMC layer of the UTRAN generates a broadcast / multicast control (BMC) message by adding information, such as a message ID (identification), a serial number, and a coding scheme to the CB message received from the upper layer, and transfers the BMC message to the RLC layer. The BMC messages are transferred from the RLC layer to the MAC layer through a logical channel, i.e., the CTCH (Common Traffic Channel). The CTCH is mapped to a transport channel, i.e., a FACH, which is mapped to a physical channel, i.e., a S-CCPCH (Secondary Common Control Physical Channel).

The PDCP (Packet Data Convergence Protocol) layer, as a higher layer of the RLC layer, allows the data transmitted through a network protocol (such as an IPv4 or IPv6) to be effectively transmitted on a radio interface with a relatively small bandwidth. To achieve this, the PDCP layer performs the function of reducing unnecessary control information used for a wired network, and this type of function is called, header compression.

There is a radio resource control (RRC) layer at a lowermost portion of the L3 layer. The RRC layer is defined only in the control plane, and handles the controlling of logical channels, transport channels, and physical channels with respect to setting, resetting, and releasing of radio bearers. The radio bearer service refers to a service that the second layer (L2) provides for data transmission between the terminal and the UTRAN, and in general, setting the radio bearer refers to defining the protocol layers and the channel characteristics of the channels required for providing a specific service, as well as respectively setting substantial parameters and operation methods.

The RLC layer can belong to the user plane or to the control plane depending upon the type of layer connected at the upper layer of the RLC layer. That is, if the RLC layer receives data from the RRC layer, the RLC layer belongs to the control plane. Otherwise, the RLC layer belongs to the user plane.

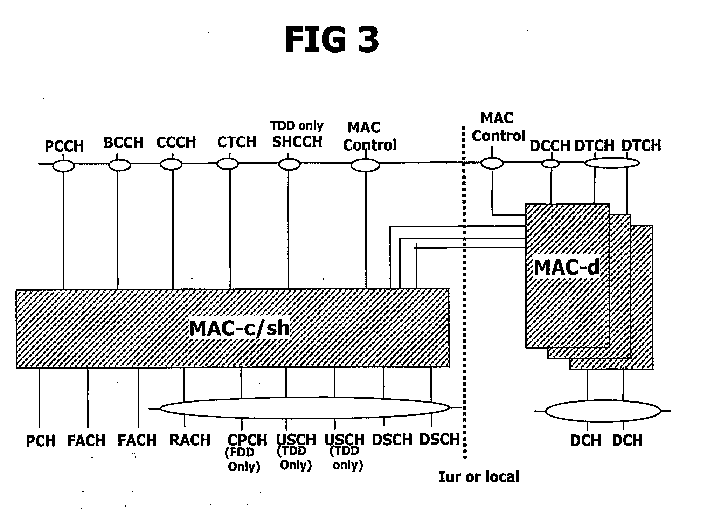

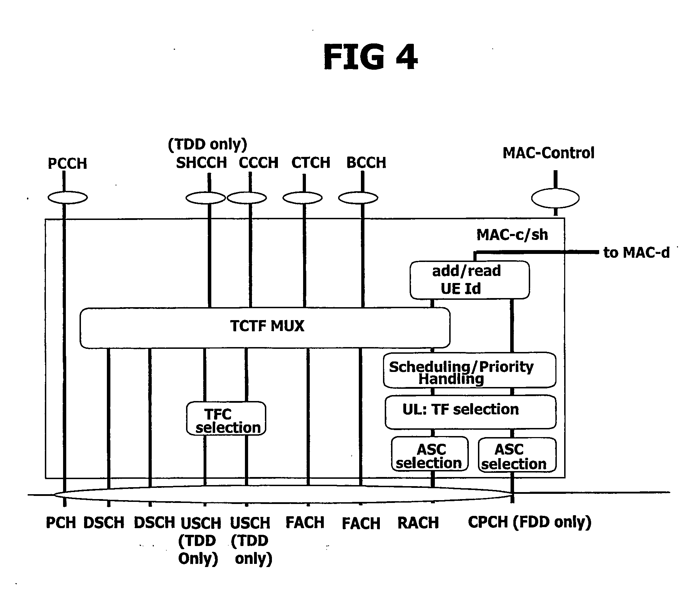

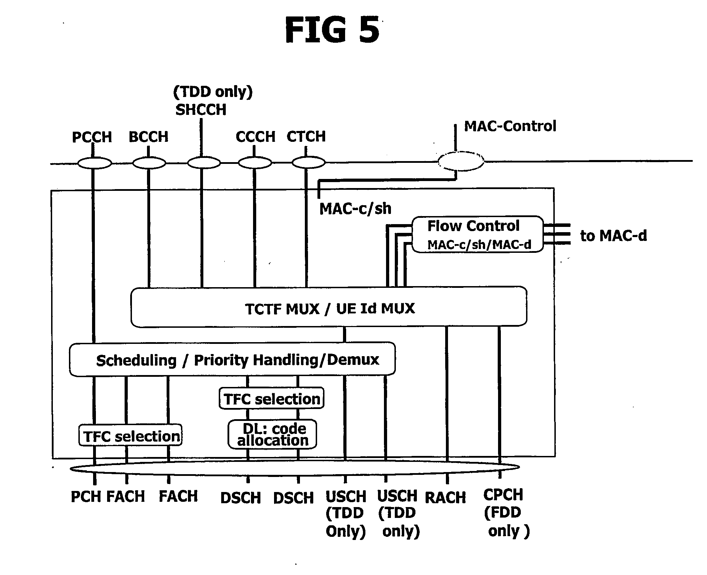

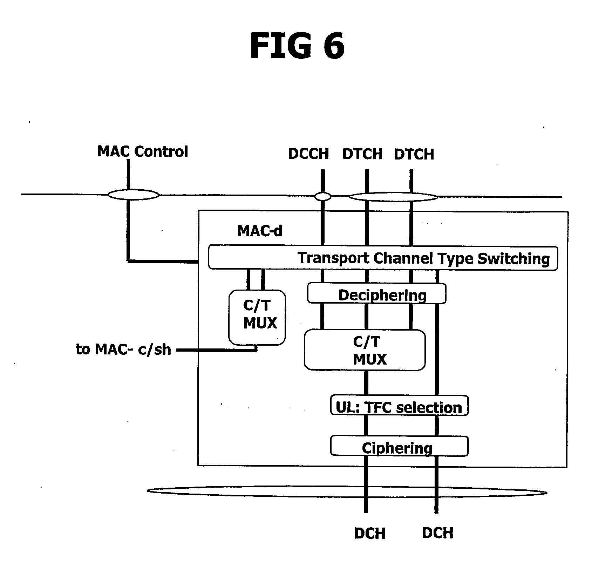

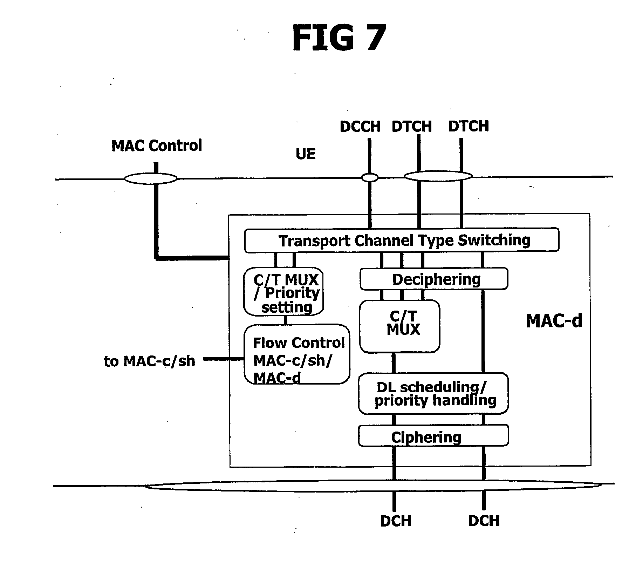

The MAC header will now be described in greater detail. Figure 3 shows a structure of a MAC layer for the UTRAN. Figures 4 to 7 show structures of the MAC-d and MAC-c/sh sublayer of the UTRAN, in which the square blocks show each function of the MAC layer. The primary functions thereof will now be described.

The MAC layer exists between the RLC and physical layers and its major function is to map the logical channels and transport channels to each other. The MAC layer needs such channel mapping because a channel handling method of a higher layer of the MAC layer is different from that of a lower layer of the MAC layer. Namely, in the higher layer of the MAC layer, channels are divided into control channels of the control plane and traffic channels of the user plane according to the content of data transferred on the channel. However, in the lower layer of the MAC layer, channels are divided into common channels and dedicated channels according to how the channels are shared. Therefore, channel mapping between the higher and lower layers of the MAC layer is very significant. The relationship of channel mapping is shown in FIG. 4, which illustrates a diagram of the channel mapping in a UE.

Another major function of the MAC layer is logical channel multiplexing. The MAC layer multiplexes several logical channels into one transport channel, so that a multiplexing gain is attained. Multiplexing gain is significant for intermittently transmitted traffic, such as signaling information or packet data. For circuit data, multiplexing is generally not used because data is continuously transferred, and as a result, the multiplexing gain is relatively not so high.

The channel mapping and logical channel multiplexing functions of the MAC layer are advantageous in increasing both the flexibility of channel selection and the efficiency of channel resources, but to support these advantages, certain kinds of identification functions are required.

Identification is classified into two types; UE identification and logical channel identification. First, UE identification is needed for a common transport channel, since it is shared by a plurality of UEs. Second, logical channel identification is needed when several logical channel are multiplexed into one transport channel. To identification purposes, the MAC layer inserts a TCTF (target channel type field), UE-Id Type, UE-Id and/or C/T (Control/Traffic) fields into the header of a MAC PDU.

In more detail, UE identification is required when dedicated logical channel such as DCCH or DTCH is mapped to common transport channel such as CPCH, DSCH, or USCH. To acheive this, the MAC layer adds a RNTI (radio network temporary identity) to UE-ID field of MAC PDU header. Currently, three kinds of RNTI such as U-RNTI (UTRAN RNTI), C-RNTI (cell RNTI), and DSCH-RNTI are used to identify a specific UE. Since there are three kinds of RNTI that are used, a UE-ID type field informing which RNTI is used is also added to MAC PDU header.

For logical channel identification, two levels of logical channel identification are applied. The first level is logical channel type identification provided by the TCTF (target channel type field), and the second level is dedicated logical channel identification provided by the C/T (Control/Traffic) field.

The TCTF is required for a common transport channel like the FACH and RACH on which several types of logical channels are multiplexed. For example, the BCCH, CCCH, CTCH, and one or more dedicated logical channels (DCCH or DTCH) can be mapped on the FACH simultaneously, and the CCCH and one or more dedicated logical channels can be mapped on RACH simultaneously. Therefore, the TCTF provides logical channel type identification on the FACH and RACH, i.e. whether the received data on the FACH or RACH belongs to the BCCH, CCCH, CTCH, or one of the dedicated logical channels.

Although the TCTF identifies the type of logical channel, it does not identify each of the logical channels. The TCTF is required for the transport channel when a dedicated logical channel can be mapped together with other logical channels. Thus, the TCTF identifies whether the logical channel is a dedicated logical channel or other logical channel. However, for common logical channels, since only one common logical channel of the same type can be mapped on a single transport channel, the TCTF also provides logical channel identification in the case of common logical channels.

On the contrary, more than one dedicated logical channel can be mapped to the FACH or RACH at the same time. In other words, several DCCHs or DTCHs can be mapped to the FACH or RACH. Therefore, for dedicated logical channels, identification of each dedicated logical channel is needed in addition to the identification of the type of logical channel, and the C/T field serves this purpose.

Identification of each dedicated logical channel is performed by using the C/T field due to the following reasons. First, unlike common logical channels, a plurality of dedicated logical channels can be mapped to one transport channel at the same time. Second, a dedicated logical channel is handled by the MAC-d in the SRNC, whereas the other common logical channels are handled by the MAC-c/sh. A plurality of the dedicated logical channels that are mapped to the same transport channel have their logical channel identities, respectively. Additionally, such value is used as a C/T field value. If only one dedicated logical channel exists for the transport channel, the C/T field is not used.

Table 1 below shows the different identifiers of a MAC header that are used according to the mapping relationship between logical channels and transport channels for FDD. In Table 1, a C/T field exists when several dedicated logical channels (DCCH or DTCH) are mapped. Also, "N" indicates that there is no header, "-" indicates that there is no mapping relationship, and "UE-ID" indicates that both a UE-ID field and a UE-ID type field exist. A UE-ID field always exists together with a UE-ID type field.

**[Table 1]**

| | DCH | RACH | FACH | DSCH | CPCH | BCH | PCH |
|---|---|---|---|---|---|---|---|
| DCCH or DTCH | C/T | TCTF UE-ID C/T | TCTF UE-ID C/T | UE-ID C/T | UE-ID C/T | - | - |
| BCCH | - | - | TCTF | - | - | N | - |
| PCCH | - | - | - | - | - | - | N |
| CCCH | - | TCTF | TCTF | - | - | - | - |
| CTCH | - | - | TCTF | - | - | - | - |

As shown in the above table, in the related art, common type of logical channels like the BCCH, PCCH, CCCH, and CTCH do not have a C/T field to identify each logical channel. This is because, in the related art, there is no need to multiplex several common logical channels of the same type into a single transport channel. The reason is that since the same information is transmitted on the common logical channels of the same type, the receiving end (Receiver) does not have to receive more than one common logical channel of the same type at the same time. Therefore, a single common transport channel like the FACH or RACH always carries only one common logical channel of the same type, and there is no need to add a C/T field for the common logical channels in the related art.

Recently, a new type of service called MBMS (Multimedia Broadcast/Multicast Service) has been proposed. MBMS is a PS (Packet Switched) domain service of transferring multimedia data such as audio, pictures, video, etc. to a plurality of terminals using a unidirectional point-to-multipoint bearer service.

Since MBMS data is shared by multiple users, it should be transmitted through a common logical channel as in the related art. However, since MBMS is a multimedia service, multiple services of different QoS or multiple streams of different QoS in the same service may be provided to a single UE. That is, it is expected that multiple common logical channels of the same type need to be mapped to the same transport channel when providing MBMS.

In the related art, however, multiple common logical channels of the same type cannot be mapped to the same transport channel. This is because, there is no common logical channel identifier in the MAC header, and there is no identification function in the MAC-c/sh. Therefore, a new functionality of common logical channel identification should be considered when MBMS or other type of packet switched (PS) domain service is to be provided.

WO 2004/028041 A1 describes a method for transmitting multicast data through a downlink channel, wherein a logical channel indicator is added in service data mapped to a shared channel so that a terminal can discriminate a type of service data transmitted through the shared channel. This prior art document falls within the terms of A.54(3) EPC 1973.

### DISCLOSURE OF THE INVENTION

Accordingly, the present invention is directed to a method of multiplexing logical channels and an apparatus thereof that substantially obviates one or more problems due to limitations and disadvantages of the related art.

An object of the present invention is to provide a method of multiplexing logical channels and an apparatus thereof, by which two or more common logical channels of the same type are multiplexed to the same transport channel in a mobile communication system providing multimedia services.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The objects are solved by the features of the independent claims.

Preferably, the multimedia service is a multimedia broadcast service or a multimedia multicast service.

Preferably, the common logical channels transmit different types of media data, and each media data has a different quality of service (QoS).

Preferably, the multiplexing step is performed in a media access control (MAC) layer, the MAC is a common MAC, and the MAC is a layer managing a common transport channel including a multimedia broadcast transport channel or a multimedia multicast transport channel.

Preferably, the mobile communication system allocates an identifier identifying the common logical channel to each common logical channel, and allocation of an identifier is handled by a radio resource control (RRC) layer of a radio access network.

Preferably, each common logical channel receives a data unit of an entity of a specific radio link control (RLC) layer.

To achieve the above objects, there is also provided a method of multiplexing logical channels, in a mobile communication system, comprising: multiplexing data units of two or more common logical channels to the same transport channel; and adding an identifier to each multiplexed data unit and transmitting them.

Preferably, the identifier identifies a specific common logical channel among the same type of common logical channels.

Preferably, the mobile communication system allocates an identifier identifying the common logical channel to each common logical channel.

Preferably, the identifier is allocated by a RRC (Radio Resource Control) layer of a radio access network.

Preferably; the multiplexing step is performed in a MAC layer managing common transport channels including a broadcast or multicast transport channel.

Preferably, the multiplexing step comprises: multiplexing data received via a plurality of common logical channels of the same type; attaching an identifier to a header of the received data to generate a protocol data unit (PDU); and transmitting the generated PDU through a specific transport channel.

Preferably, the de-multiplexing step comprises: receiving data through a specific transport channel; checking the identifier of the received data and de-multiplexing the received data; and transmitting each received data to a higher layer through the common logical channel identified by the identifier.

Preferably, the de-multiplexing step is performed in the MAC layer managing common transport channels including a broadcast or a multicast transport channel.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a block diagram of a general network architecture of UMTS;
FIG. 2 illustrates a block diagram of a structure of a radio interface protocol between a terminal and a UTRAN based on 3GPP radio access network standards;
FIG. 3 illustrates a block diagram of a general architecture of a MAC layer of the UTRAN;
FIG. 4 is a diagram of a general architecture of a MAC-c/sh of the terminal;
FIG. 5 is a diagram of a general architecture of a MAC-c/sh of the UTRAN;
FIG. 6 is a diagram of a general architecture of a MAC-d of the terminal;
FIG. 7 is a diagram of a general architecture of a MAC-d of the UTRAN;

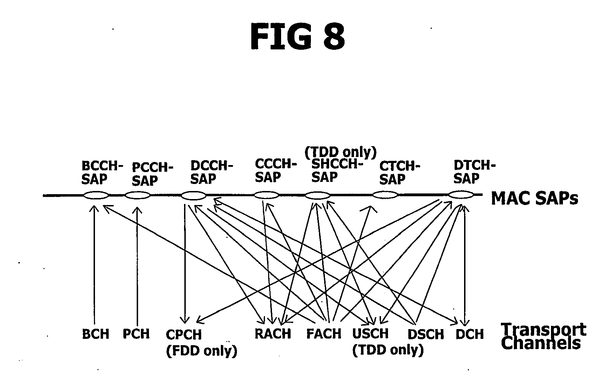

FIG. 8 is a diagram of mapping relationship (at the UE side) between logical and transport channels;
FIG. 9A and FIG. 9B are diagrams of a MAC PDU format according to one embodiment of the present invention;
FIG. 10 is a diagram of an architecture of a MAC-c/sh of the UTRAN according to one embodiment of the present invention;
FIG. 11 is a diagram of an architecture of a MAC-c/sh of the terminal according to one embodiment of the present invention;
FIG. 12 is a diagram of the allocation of CLI (Common Logical channel Identifier) field values according to one embodiment of the present invention; and
FIG. 13 is a diagram of data transmission according to one embodiment of the present invention.

### BEST MODE FOR CARRYING OUT THE INVENTION

Reference will now be made in detail to the preferred embodiments of the present invention, examples of which are illustrated in the accompanying drawings.

The present invention is characterized in that a CLI (Common Logical channel Identifier) field (that does not exist in the related art, but newly defined by the present invention) is inserted in header of a corresponding data unit in the MAC-c/sh when several common logical channels of the same type are mapped to one transport channel. Moreover, different CLI fields can be allocated to different common logical channels, respectively. Here, one CLI field can be used in discerning the common logical channels multiplexed to the same transport channel only.

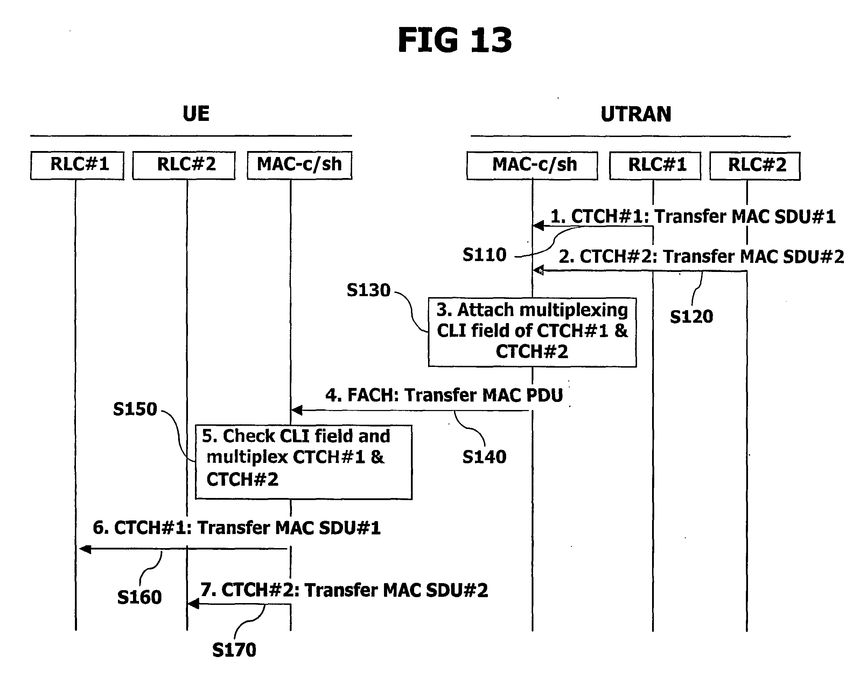

FIG. 13 is a diagram of data transmission according to one embodiment of the present invention.

Referring to FIG. 13, a method of multiplexing logical channels according to one embodiment of the present invention includes the steps of multiplexing data units of two or more common logical channels to a same transport channel (S110 to S130), transmitting the multiplexed data units to a terminal (S140); and de-multiplexing the transmitted data units to the common logical channels (steps S150 to S170).

The multiplexing step includes the steps of multiplexing data received via a plurality of the common logical channels (S110 and S120), attaching identity to a header of the received data to generate protocol data unit (PDU) (not shown in the drawing), and transmitting the generated PDU through a specific transport channel (S130).

The de-multiplexing step further includes the steps of receiving the data through the specific transport channel, checking the identity of the received data and de-multiplexing the received data (S150), and transmitting each of the received data to a higher layer through the common logical channel designated by the identity (S160, S170).

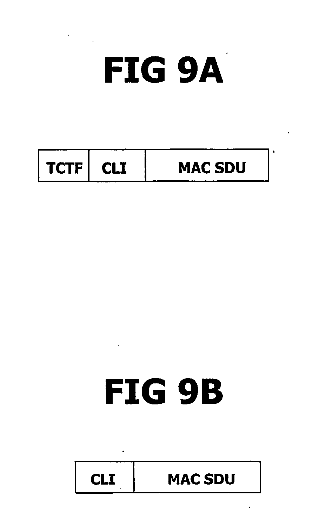

FIG. 9A and FIG. 9B are diagrams of a MAC PDU format according to one embodiment of the present invention, in which the MAC PDU format is used when data of a common logical channel such as the PCCH, CCCH, or CTCH is transferred through a common transport channel such as the FACH or DSCH, and in which the TCTF and CLI field comprise a header of MAC PDU, and the MAC SDU is a payload of the MAC PDU.

Referring to FIG. 9A and FIG. 9B, there are two types of MAC PDU formats.

The first type is that the MAC PDU header is composed of TCTF and CLI fields, which is used when the transport channel carries different types of logical channels (Ref. FIG. 9A). In this case, the TCTF field identifies the type of logical channel, and the CLI field identifies the specific common logical channel among the common logical channels of the type identified by the TCTF field.

The second type is that the MAC PDU header is composed of only a CLI field (a TCTF field is not included), which is used when the transport channel carries only the specific type of common logical channels (see FIG. 9B). In this case, the CLI field is included in the header as in the first type, but the TCTF field is not needed since the transport channel itself identifies the type of logical channel.

The first type is applied to a MAC PDU transferred through a common transport channel like the FACH where several types of logical channels like the CCCH or CTCH can be mapped, and the second type is applied to a MAC PDU transferred through a common transport channel like the PCH where only one type of logical channel (PCCH) can be mapped.

In summary, a TCTF field is present in the MAC PDU header when the transport channel can carry more than one type of logical channels, and a CLI field is present in the MAC PDU header when more than one common logical channels of the same type are multiplexed to the transport channel.

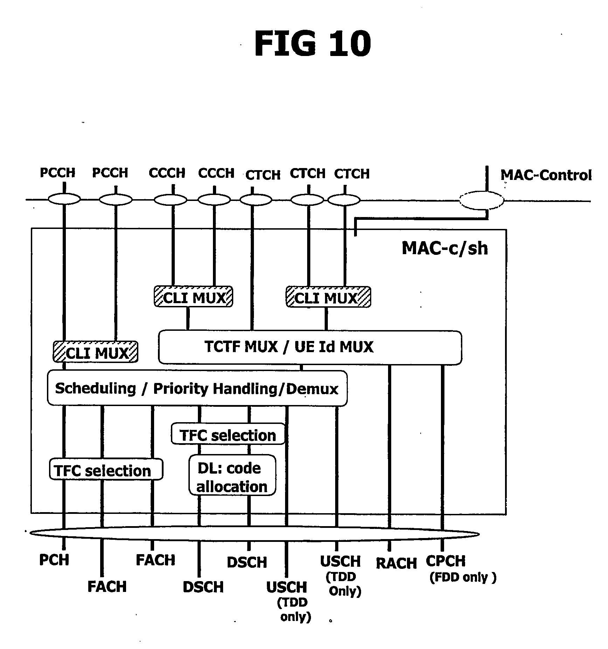

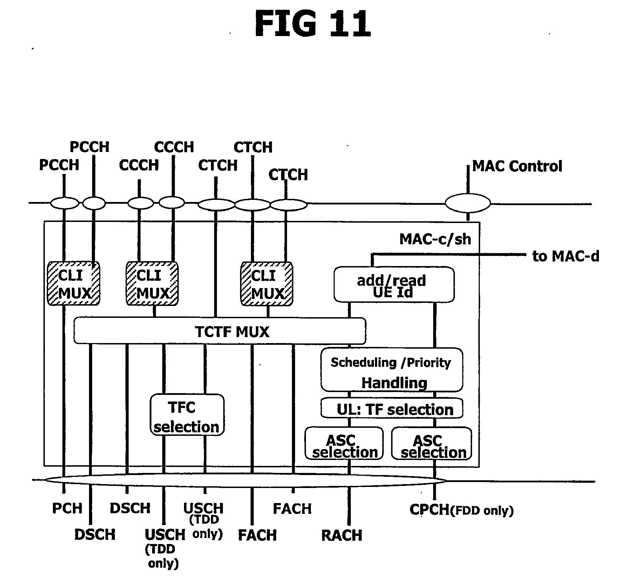

FIG. 10 is a diagram of an architecture of a MAC-c/sh of the UTRAN according to one embodiment of the present invention, and FIG. 11 is a diagram of an architecture of the MAC-c/sh of the terminal according to one embodiment of the present invention.

Referring to FIG. 10 and FIG. 11, when common logical channels such as the CCCH, PCCH, and CTCH are multiplexed, the MAC-c/sh performs a CLI multiplexing (MUX) function. Namely, when a plurality of common logical channels of the same type are multiplexed to one transport channel, the MAC-c/sh performs the CLI MUX function. The CLI MUX function of the MAC-c/sh in the transmitting end is to insert a CLI field for designating a specific common logical channel in a header of the corresponding MAC PDU. The CLI MUX function of the MAC-c/sh in the receiving end is to remove the CLI field from the MAC PDU after reading CLI field information designating the specific common logical channel from the header of the received MAC PDU. It should be noted that in the present invention, if the UTRAN is the transmitting end, then the terminal is the receiving end, and vice versa.

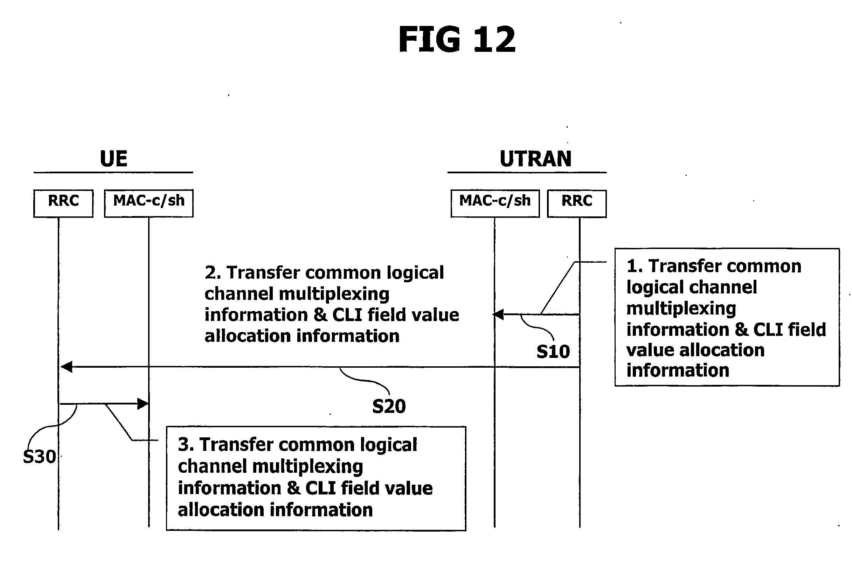

FIG. 12 is a diagram of the allocation of CLI field values according to one embodiment of the present invention, in which the RRC layer of the UTRAN handles the bundling of several common logical channels to multiplex to one transport channel and allocating a CLI field value to each of the common logical channels.

Referring to FIG. 12, a procedure of allocating CLI field values according to one embodiment of the present invention is explained as follows.
1) The RRC layer of the UTRAN transfers CLI field values', which are allocated to multiplexed common logical channels, respectively, to the MAC-c/sh layer of the UTRAN, together with 'logical channel multiplexing information' related to multiplexing one or more common logical channels to a specific transport channel.
2) The RRC layer of the UTRAN transfers the 'logical channel multiplexing information' and the 'CLI field values' to the RRC layer of the terminal. Here, the 'logical channel multiplexing information' and the 'CLI field values' are transferred to the RRC layers of all the terminals that are supposed to receive the transport channel.
3) The RRC layer of the terminal having received such information transfers the received information to the MAC-c/sh of the terminal.

FIG. 13 is a diagram of data transmission according to one embodiment of the present invention. First, it is assumed that common logical channels CTCH#1. and CTCH#2 are multiplexed to one common transport channel, the FACH. Moreover, it is assumed that transmitting and receiving ends are a UTRAN and a terminal, respectively. Also, it is assumed that the peer of the RLC entity #1 at the transmitting end is the RLC entity #1 at the receiving end, and the peer of the RLC entity #2 at the transmitting end is the RLC entity #2 at the receiving end.

Referring to FIG. 13, a process of common logical channel data transmission of the MAC-c/sh according to one embodiment of the present invention is explained as follows.
1) The RLC entity #1 of the transmitting end transfers MAC SDU#1 to the MAC-c/sh of the transmitting end through CTCH#1.
2) The RLC entity #2 of the transmitting end transfers MAC SDU#2 to the MAC-c/sh of the transmitting end through CTCH#2.
3) The MAC-c/sh of the transmitting end multiplexes CTCH#1 and CTCH#2, and attaches a MAC header including a CLI field to MAC SDU#1 to construct MAC PDU#1. Here, the CLI field value included in the header of MAC PDU#1 indicates the logical channel CTCH#1. With the same scheme, a MAC header including a CLI field is attached to MAC SDU#2 to construct MAC PDU#2. Here, the CLI field value included in the header of MAC PDU#2 indicates the logical channel CTCH#2.
4) The MAC-c/sh of the transmitting end transfers MAC PDU#1 and MAC PDU#2 to the physical layer through the FACH. And, the MAC PDU#1 and MAC PDU#2 are transmitted to physical layer of the receiving end through an air interface. The physical layer of the receiving end transfers the received MAC PDU#1 and MAC PDU#2 to the MAC-c/sh of the receiving end through the FACH.
5) The MAC-c/sh of the receiving end checks the CLI fields included in the received MAC PDU#1 and MAC PDU#2, and then transfers them to logical channels CTCH#1 and CTCH#2, respectively. Specifically, the MAC-c/sh of the receiving end detects CLI field values from the headers of the MAC PDUs, and checks whether the detected CLI field value contains information of the logical channel CTCH#1 or CTCH#2. According to the checked results, the MAC-c/sh performs de-multiplexing.
6) If the detected CLI field value indicates the logical channel CTCH#1, the corresponding MAC PDU is transferred to RLC entity #1 of the receiving end through the logical channel CTCH#1. In this case, if reception is correct, the MAC PDU is the MAC PDU#1.
7) If the detected CLI field value indicates the logical channel CTCH#2, the corresponding MAC PDU is transferred to RLC entity #2 of the receiving end through the logical channel CTCH#2. In this case, if reception is correct, the MAC PDU is the MAC PDU#2.

### INDUSTRIAL APPLICABILITY

Accordingly, in the present invention, the MAC-c/sh performs the multiplexing and de-multiplexing functions for common logical channels of the same type and a newly proposed CLI field is used to identify each of the common logical channels, whereby multiplexing of multiple common logical channels of the same type to the same transport channel becomes possible. Consequently, multiple services of different QoS or multiple streams of different QoS in the same service can be provided to a single UE, which is an essential feature for next generation mobile communication systems. As such, the motivation to apply the teachings and suggestions of the present invention to various types of radio (wireless) communication schemes would be clearly understood by those having ordinary skill in the art.

The forgoing embodiments are merely exemplary and are not to be construed as limiting the present invention. The present teachings can be readily applied to other types of methods and apparatuses. The description of the present invention is intended to be illustrative, and not to limit the scope of the claims. Many alternatives, modifications, and variations will be apparent to those skilled in the art.

## Claims

1. A method of data transmission in a mobile communication system, wherein data units can be communicated over different types of common logical channels, wherein at least two of the common logical channels are of a first type, the method comprising:
mapping two or more common logical channels of the first type to a common transport channel with allocation of at least one common logical channel identifier to data units of the two or more common logical channels of the first type; and
transferring the data units having the at least one common logical channel identifier allocated thereto through the common transport channel,
wherein the two or more common logical channels of the first type are same common logical channels transferring same type of information,
wherein the two or more common logical channels of the first type are Multicast Traffic Channels (MTCHs), and
wherein the common transport channel is a Forward Access Channel (FACH).

2. The method of claim 1, wherein the mapping step further comprises:
multiplexing the data units of the common logical channels for the common transport channel mapped thereto.

3. The method of claim 2, further comprising:
transmitting the transferred data units on a physical channel, wherein the common logical channels are distinguishable due to the at least one common logical channel identifier allocated thereto.

4. The method of claim 3, wherein the steps of mapping, transferring, and transmitting allow transmission of multiple multimedia services of different Quality of Service or transmission of multiple data streams of different QoS in a single multimedia service.

5. A method of data reception in a mobile communication system, wherein data units can be communicated over different types of common logical channels, wherein at least two of the common logical channels are of a first type, the method comprising:
receiving data units of two or more common logical channels of the first type that were mapped to a common transport channel, the data units having at least one common logical channel identifier allocated thereto; and
processing the received data units according to the at least one common logical channel identifier,
wherein the two or more common logical channels of the first type are same common logical channels transferring same type of information,
wherein the two or more common logical channels of the first type are Multicast Traffic Channels (MTCHs), and
wherein the common transport channel is a Forward Access Channel (FACH).

6. The method of claim 5, wherein the data units of the common logical channels have been multiplexed for the common transport channel mapped thereto.

7. The method of claim 5, wherein the processing step further comprises:
checking the common logical channel identifier of the received data units;
de-multiplexing the received data units; and
delivering each de-multiplexed data unit to a higher layer through a common logical channel designated by the common logical channel identifier.

8. The method of claim 5, wherein the steps of receiving and processing allow reception of multiple multimedia services of different Quality of Service or reception of multiple data streams of different QoS in a single multimedia service.

9. The method of claim 1 or 5, wherein the data units are related to one or more multimedia services that use a point-to-multipoint bearer service.

10. The method of claim 1 or 5, wherein the at least one common logical channel identifier is in a header of a corresponding data unit.

11. A network apparatus for performing a method of data transmission in a mobile communication system, wherein data units can be communicated over different types of common logical channels, wherein at least two of the common logical channels are of a first type, the apparatus comprising:
a radio resource control RRC layer, a radio link control RLC layer, a medium access control (MAC) layer, and a physical (PHY) layer, the RLC layer and MAC layer having logical channels therebetween, the MAC layer and the PHY layer having transport channels therebetween, and the PHY layer having physical channels associated thereto, and the RRC layer, the RLC layer, the MAC layer, and the PHY layer are adapted to and cooperate in performing the steps of,
mapping two or more common logical channels of the first type to a common transport channel with allocation of at least one common logical channel identifier to data units of the two or more common logical channels of the first type; and
transferring the date units having the at least one common logical channel identifier allocated thereto through the common transport channel,
wherein the two or more common logical channels of the first type are same common logical channels transferring same type of information,
wherein the two or more common logical channels of the first type are Multicast Traffic Channels (MTCHs), and
wherein the common transport channel is a Forward Access Channel (FACH).

12. The apparatus of claim 11, wherein the mapping step further comprises:
multiplexing the data units of the common logical channels for the common transport channel mapped thereto.

13. The apparatus of claim 12, which is adapted to transmit the transferred data units on a physical channel, wherein the common logical channels are distinguishable due to the at least one common logical channel identifier allocated thereto.

14. The apparatus of claim 13, wherein the steps of mapping, transferring, and transmitting allow transmission of multiple multimedia services of different Quality of Service or transmission of multiple data streams of different QoS in a single multimedia service.

15. A user equipment apparatus for performing a method of data reception in a mobile communication system, wherein data units can be communicated over different types of common logical channels, wherein at least two of the common logical channels are of a first type, the device comprising:
a radio resource control (RRC) layer, a radio link control (RLC) layer, a medium access control MAC layer, and a physical (PHY) layer, the RLC layer and MAC layer having logical channels therebetween, the MAC layer and the PHY layer having transport channels therebetween, and the PHY layer having physical channels associated thereto, and the RRC layer, the RLC layer, the MAC layer, and the PHY layer are adapted to and cooperate in performing the steps of:
receiving data units of two or more common logical channels of the first type that were mapped to a common transport channel, the data units having at least one common logical channel identifier allocated thereto; and
processing the received data units according to the at least one common logical channel identifier,
wherein the two or more common logical channels of the first type are same common logical channels transferring same type of information,
wherein the two or more common logical channels of the first type are Multicast Traffic Channels (MTCHs), and
wherein the common transport channel is a Forward Access Channel (FACH).

16. The apparatus of claim 15, wherein the data units of the common logical channels have been multiplexed for the common transport channel mapped thereto.

17. The apparatus of claim 15, wherein the processing step further comprises:
checking the common logical channel identifier of the received data units;
de-multiplexing the received data units; and
delivering each de-multiplexed data unit to a higher layer through a common logical channel designated by the common logical channel identifier.

18. The apparatus of claim 13 or 17, wherein the data units are related to one or more multimedia services that use a point-to-multipoint bearer service.

19. The apparatus of claim 11 or 15, wherein the at least one common logical channel identifier is in a header of a corresponding data unit.

20. The method of claim 1 or 5, wherein a type of the common logical channels is one of a paging control channel type, a broadcast control channel type, a common control channel type, and a common traffic channel type.

21. The method of claim 1 or 5, wherein a target channel type field (TCTF) logical channel identifier is used to identify a type of a logical channel among different types of common logical channels.

22. The method of claim 10, wherein the corresponding data unit is a MAC (medium access control) protocol data unit (PDU).

23. The method of claim 10, wherein the header includes a target channel type field (TCTF) logical channel identifier used to identify a type of a logical channel among different types of common logical channels.

24. The method of claim 1 or 5, wherein the common logical channels transmit different types of media data, wherein each media data has preferably a different quality of service (QoS).

25. The method of claim 1 or 5, wherein the at least one common logical channel identifier is allocated by a radio resource control (RRC) layer.

26. The method of claim 25, wherein the RRC layer is in a network.

27. The apparatus of claim 11 or 15, wherein a type of the common logical channels is one of a paging control channel type, a broadcast control channel type, a common control channel type, and a common traffic channel type.

28. The apparatus of claim 11 or 15, wherein a target channel type field (TCTF) logical channel identifier is used to identify a type of a logical channel among different types of common logical channels.

29. The apparatus of claim 19, wherein the corresponding data unit is a MAC (medium access control) protocol data unit (PDU).

30. The apparatus of claim 19, wherein the header includes a target channel type field (TCTF) logical channel identifier used to identify a type of a logical channel among different types of common logical channels.

31. The apparatus of claim 11 or 15, wherein the common logical channels transmit different types of media data, wherein each media has preferably a different quality of service (QoS).

32. The apparatus of claim 11 or 15, wherein the at least one common logical channel identifier is allocated by a radio resource control (RRC) layer.

33. The apparatus of claim 32, wherein the RRC layer is in a network.

## Patentansprüche

1. Verfahren zum Senden von Daten in einem mobilen Kommunikationssystem, wobei Dateneinheiten über verschiedene Typen gemeinsamer Logikkanäle übermittelt werden können, wobei wenigstens zwei der gemeinsamen Logikkanäle von einem ersten Typ sind, wobei das Verfahren umfasst:
Abbilden von zwei oder mehr gemeinsamen Logikkanälen des ersten Typs auf einen gemeinsamen Transportkanal mit Zuweisung wenigstens eines Identifizierers eines gemeinsamen Logikkanals zu Dateneinheiten der zwei oder mehr gemeinsamen Logikkanäle des ersten Typs; und
Übertragen der Dateneinheiten, die den wenigstens einen Identifizierer eines gemeinsamen Logikkanals haben, der diesem zugewiesen ist, über den gemeinsamen Transportkanal,
wobei die zwei oder mehr gemeinsamen Logikkanäle des ersten Typs gleiche gemeinsame Logikkanäle sind, die denselben Typ von Informationen übertragen,
wobei die zwei oder mehr gemeinsamen Logikkanäle des ersten Typs Multicast-Verkehrskanäle (MTCHs) sind, und
wobei der gemeinsame Transportkanal ein Vorwärtszugriffskanal (FACH) ist.

2. Verfahren nach Anspruch 1, wobei der Abbildungsschritt ferner umfasst:
Multiplexieren der Dateneinheiten der gemeinsamen Logikkanäle für den gemeinsamen Transportkanal, auf den sie abgebildet sind.

3. Verfahren nach Anspruch 2, das ferner umfasst:
Senden der übertragenen Dateneinheiten auf einem physikalischen Kanal, wobei die gemeinsamen Logikkanäle anhand des wenigstens einen Identifizierers eines gemeinsamen logischen Kanals, der ihnen zugewiesen ist, unterscheidbar sind.

4. Verfahren nach Anspruch 3, wobei die Schritte des Abbildens, Übertragens und Sendens das Senden mehrerer Multimediadienste mit unterschiedlicher Dienstqualität (QoS) oder das Senden mehrerer Datenströme mit unterschiedlicher QoS in einem einzigen Multimediadienst ermöglichen.

5. Verfahren zum Empfangen von Daten in einem mobilen Kommunikationssystem, wobei Dateneinheiten über verschiedene Typen von gemeinsamen Logikkanälen übermittelt werden können, wobei wenigstens zwei der gemeinsamen Logikkanäle von einem ersten Typ sind, wobei das Verfahren umfasst:
Empfangen von Dateneinheiten von zwei oder mehr gemeinsamen Logikkanälen des ersten Typs, die auf einen gemeinsamen Transportkanal abgebildet wurden, wobei die Dateneinheiten wenigstens einen Identifizierer eines gemeinsamen Logikkanals besitzen, der diesem zugewiesen ist; und
Verarbeiten der empfangenen Dateneinheiten in Übereinstimmung mit dem wenigstens einen Identifizierer eines gemeinsamen Logikkanals,
wobei die zwei oder mehr gemeinsamen Logikkanäle des ersten Typs gleiche gemeinsame Kanäle sind, die denselben Typ von Informationen übertragen,
wobei die zwei oder mehr gemeinsamen Logikkanäle des ersten Typs Multicast-Verkehrskanäle (MTCHs) sind und
wobei der gemeinsame Transportkanal ein Vorwärtszugriffskanal (FACH) ist.

6. Verfahren nach Anspruch 5, wobei die Dateneinheiten der gemeinsamen Logikkanäle für den gemeinsamen Transportkanal, auf den sie abgebildet werden, multiplexiert worden sind.

7. Verfahren nach Anspruch 5, wobei der Verarbeitungsschritt ferner umfasst:
Prüfen des Identifizierers des gemeinsamen Logikkanals der empfangenen Dateneinheiten;
Demultiplexieren der empfangenen Dateneinheiten; und
Ausgeben jeder demultiplexierten Dateneinheit zu einer höheren Schicht über einen gemeinsamen Logikkanal, der durch den Identifizierer des gemeinsamen Logikkanals bezeichnet wird.

8. Verfahren nach Anspruch 5, wobei die Schritte des Empfangens und Verarbeitens das Empfangen mehrerer Multimediadienste mit unterschiedlicher Dienstqualität (QoS) oder das Empfangen mehrerer Datenströme mit unterschiedlicher QoS in einem einzigen Multimediadienst ermöglichen.

9. Verfahren nach Anspruch 1 oder 5, wobei die Dateneinheiten auf einen oder mehrere Multimediadienste bezogen sind, die einen Punkt-zu-Mehrpunkt-Trägerdienst verwenden.

10. Verfahren nach Anspruch 1 oder 5, wobei der wenigstens eine Identifizierer des gemeinsamen Logikkanals in einem Kopfsatz einer entsprechenden Dateneinheit vorhanden ist.

11. Netzvorrichtung zum Ausführen eines Verfahrens zum Senden von Daten in einem mobilen Kommunikationssystem, wobei Dateneinheiten über verschiedene Typen gemeinsamer Logikkanäle übermittelt werden können, wobei wenigstens zwei der gemeinsamen Logikkanäle von einem ersten Typ sind, wobei die Vorrichtung umfasst:
eine Funkbetriebsmittelsteuerungs-Schicht (RRC-Schicht), eine Funkverbindungssteuerungs-Schicht (RLC-Schicht), eine Mediumzugriffsteuerungs-Schicht (MAC-Schicht) und eine physikalische Schicht (PHY-Schicht), wobei die RLC-Schicht und die MAC-Schicht zwischen sich Logikkanäle besitzen, wobei die MAC-Schicht und die PHY-Schicht zwischen sich Transportkanäle besitzen und wobei der PHY-Schicht physikalische Kanäle zugeordnet sind und die RRC-Schicht, die RLC-Schicht, die MAC-Schicht und die PHY-Schicht für die Ausführung der folgenden Schritte geeignet sind und dabei zusammenwirken:
Abbilden von zwei oder mehr gemeinsamen Logikkanälen des ersten Typs auf einen gemeinsamen Transportkanal mit Zuweisung wenigstens eines Identifizierers des gemeinsamen Logikkanals zu Dateneinheiten der zwei oder mehr gemeinsamen Logikkanäle des ersten Typs; und
Übertragen der Dateneinheiten, die den Identiflzierer des wenigstens einen gemeinsamen Logikkanals, der diesem zugewiesen ist, haben, über den gemeinsamen Transportkanal,
wobei die zwei oder mehr gemeinsamen Logikkanäle des ersten Typs gleiche gemeinsame Logikkanäle sind, die denselben Typ von Informationen übertragen,
wobei die zwei oder mehr gemeinsamen Logikkanäle des ersten Typs Multicast-Verkehrskanäle (MTCHs) sind und
wobei der gemeinsame Transportkanal ein Vorwärtszugriffskanal (FACH) ist.

12. Vorrichtung nach Anspruch 11, wobei der Abbildungsschritt ferner umfasst:
Multiplexieren der Dateneinheiten der gemeinsamen Logikkanäle für den gemeinsamen Transportkanal, auf den sie abgebildet sind.

13. Vorrichtung nach Anspruch 12, die dazu ausgelegt ist, die übertragenen Dateneinheiten auf einem physikalischen Kanal zu senden, wobei die gemeinsamen Logikkanäle anhand des wenigstens einen Identifizierers eines gemeinsamen Logikkanals, der ihnen zugewiesen ist, unterscheidbar sind.

14. Vorrichtung nach Anspruch 13, wobei die Schritte des Abbildens, Übertragens und Sendens das Senden mehrerer Multimediadienste mit unterschiedlicher Dienstqualität (QoS) oder das Senden mehrerer Datenströme mit unterschiedlicher QoS in einem einzigen Multimediadienst ermöglichen.

15. Anwendergerätvorrichtung zum Ausführen eines Verfahrens zum Empfangen von Daten in einem mobilen Kommunikationssystem, wobei die Dateneinheiten über verschiedene Typen gemeinsamer Logikkanäle übermittelt werden können, wobei wenigstens zwei der gemeinsamen Logikkanäle von einem ersten Typ sind, wobei die Vorrichtung umfasst:
eine Funkbetriebsmittelsteuerungs-Schicht (RRC-Schicht), eine Funkverbindungssteuerungs-Schicht (RLC-Schicht), eine Mediumzugriffsteuerungs-Schicht (MAC-Schicht) und eine physikalische Schicht (PHY-Schicht), wobei die RLC-Schicht und die MAC-Schicht zwischen sich Logikkanäle besitzen, wobei die MAC-Schicht und die PHY-Schicht zwischen sich Transportkanäle besitzen und wobei der PHY-Schicht physikalische Kanäle zugeordnet sind und die RRC-Schicht, die RLC-Schicht, die MAC-Schicht und die PHY-Schicht für die Ausführung der folgenden Schritte geeignet sind und dabei zusammenwirken:
Empfangen von Dateneinheiten von zwei oder mehr gemeinsamen Logikkanälen des ersten Typs, die auf einen gemeinsamen Transportkanal abgebildet wurden, wobei die Dateneinheiten wenigstens einen Identifizierer eines gemeinsamen Logikkanals besitzen, dem sie zugewiesen sind; und
Verarbeiten der empfangenen Dateneinheiten gemäß dem wenigstens einen Identifizierer des gemeinsamen Logikkanals,
wobei die zwei oder mehr gemeinsamen Logikkanäle des ersten Typs gleiche gemeinsame Logikkanäle sind, die den gleichen Typ von Informationen übertragen,
wobei die zwei oder mehr gemeinsamen Logikkanäle des ersten Typs Multicast-Verkehrskanäle (MTCHs) sind und
wobei der gemeinsame Transportkanal ein Vorwärtszugriffskanal (FACH) ist.

16. Vorrichtung nach Anspruch 15, wobei die Dateneinheiten der gemeinsamen Logikkanäle für den gemeinsamen Transportkanal, auf den sie abgebildet sind, multiplexiert worden sind.

17. Vorrichtung nach Anspruch 15, wobei der Verarbeitungsschritt ferner umfasst:
Prüfen des Identifizierers des gemeinsamen Logikkanals der empfangenen Dateneinheiten;
Demultiplexieren der empfangenen Dateneinheiten; und
Ausgeben jeder demultiplexierten Dateneinheit zu einer höheren Schicht über einen gemeinsamen Logikkanal, der durch den Identifizierer des gemeinsamen Logikkanals bezeichnet wird.

18. Vorrichtung nach Anspruch 13 oder 17, wobei die Dateneinheiten auf einen oder mehrere Multimediadienste bezogen sind, die einen Punkt-zu-Mehrpunkt-Trägerdienst verwenden.

19. Vorrichtung nach Anspruch 11 oder 15, wobei der wenigstens eine Identifizierer des gemeinsamen Logikkanals in einem Kopfsatz einer entsprechenden Dateneinheit vorhanden ist.

20. Verfahren nach Anspruch 1 oder 5, wobei ein Typ der gemeinsamen Logikkanäle ein Paging-Steuerkanaltyp, ein Rundsende-Steuerkanaltyp, ein gemeinsamer Steuerkanaltyp oder ein gemeinsamer Verkehrskanaltyp ist.

21. Verfahren nach Anspruch 1 oder 5, wobei ein Identifizierer eines Logikkanals mit Zielkanaltyp-Feld (TCTF-Logikkanalidentifizierer) verwendet wird, um einen Typ eines Logikkanals unter verschiedenen Typen gemeinsamer Logikkanäle zu identifizieren.

22. Verfahren nach Anspruch 10, wobei die entsprechende Dateneinheit eine MAC-Protokolldateneinheit (Mediumzugriffssteuerungs-PDU) ist.

23. Verfahren nach Anspruch 10, wobei der Kopfsatz einen Logikkanalidentifizierer mit Zielkanaltyp-Feld (TCTF-Logikkanalidentifizierer) enthält, der verwendet wird, um einen Typ des Logikkanals unter verschiedenen Typen gemeinsamer Logikkanäle zu identifizieren.

24. Verfahren nach Anspruch 1 oder 5, wobei die gemeinsamen Logikkanäle verschiedene Typen von Mediendaten senden, wobei sämtliche Mediendaten vorzugsweise eine unterschiedliche Dienstqualität (QoS) haben.

25. Verfahren nach Anspruch 1 oder 5, wobei der wenigstens eine Identifizierer des gemeinsamen Logikkanals durch eine Funkbetriebsmittelsteuerungs-Schicht (RRC-Schicht) zugewiesen wird.

26. Verfahren nach Anspruch 25, wobei die RRC-Schicht in einem Netz vorhanden ist.

27. Vorrichtung nach Anspruch 11 oder 15, wobei ein Typ der gemeinsamen Logikkanäle entweder ein Paging-Steuerkanaltyp, ein Rundsende-Steuerkanaltyp, ein gemeinsamer Steuerkanaltyp oder ein gemeinsamer Verkehrskanaltyp ist.

28. Vorrichtung nach Anspruch 11 oder 15, wobei ein Logikkanalidentifizierer mit Zielkanaltyp-Feld (TCTF-Logikkanalidentifizierer) verwendet wird, um einen Typ eines Logikkanals unter verschiedenen Typen gemeinsamer Logikkanäle zu identifizieren.

29. Vorrichtung nach Anspruch 19, wobei die entsprechende Dateneinheit eine MAC-Protokolldateneinheit (Mediumzugriffsteuerungs-PDU) ist.

30. Vorrichtung nach Anspruch 19, wobei der Kopfsatz einen Logikkanalidentifizierer mit Zielkanaltyp-Feld (TCTF) enthält, der verwendet wird, um einen Typ eines Logikkanals unter verschiedenen Typen gemeinsamer Logikkanäle zu identifizieren.

31. Vorrichtung nach Anspruch 11 oder 15, wobei die gemeinsamen Logikkanäle verschiedene Typen von Mediendaten senden, wobei alle Medien vorzugsweise eine unterschiedliche Dienstqualität (QoS) haben.

32. Vorrichtung nach Anspruch 11 oder 15, wobei der wenigstens eine Identifizierer eines gemeinsamen Logikkanals durch eine Funkbetriebsmittelsteuerungs-Schicht (RRC-Schicht) zugewiesen wird.

33. Vorrichtung nach Anspruch 32, wobei die RRC-Schicht in einem Netz vorhanden ist.

## Revendications

1. Procédé d'émission de données dans un système de communication mobile, dans lequel il est possible de communiquer des unités de données sur différents types de canaux logiques communs, au moins deux des canaux logiques communs étant d'un premier type, le procédé comprenant des étapes consistant à :
établir une correspondance entre deux ou plus de deux canaux logiques communs du premier type et un canal de transport commun avec attribution d'au moins un identifiant de canaux logiques communs à des unités de données des deux ou plus de deux canaux logiques communs du premier type ; et
transmettre, via le canal de transport commun, les unités de données auxquelles est/sont attribué(s) le/les identifiant(s) de canaux logiques communs,
dans lequel les deux ou plus de deux canaux logiques communs du premier type sont des canaux logiques communs identiques transmettant le même type d'informations,
dans lequel les deux ou plus de deux canaux logiques communs du premier type sont des Canaux de Trafic Multidestinataire (MTCH), et
dans lequel le canal de transport commun est un Canal d'Accès dans le sens Descendant (FACH).

2. Procédé selon la revendication 1, dans lequel l'étape d'établissement de correspondance comporte en outre :
le multiplexage des unités de données des canaux logiques communs pour le canal de transport commun dont la correspondance avec ceux-ci a été établie.

3. Procédé selon la revendication 2, comprenant en outre une étape consistant à :
émettre sur un canal physique les unités de données transférées, les canaux logiques communs pouvant être distingués grâce à l'identifiant/aux identifiants de canaux logiques communs attribué(s) à celles-ci.

4. Procédé selon la revendication 3, dans lequel les étapes d'établissement de correspondance, de transmission et d'émission permettent l'émission de multiples services multimédia à Qualités de Services différentes ou l'émission de multiples flux de données à QdS différentes en un seul service multimédia.

5. Procédé de réception de données dans un système de communication mobile, dans lequel il est possible de communiquer des unités de données sur différents types de canaux logiques communs, au moins deux des canaux logiques communs étant d'un premier type, le procédé comprenant des étapes consistant à :
recevoir des unités de données présentes sur deux ou plus de deux canaux logiques communs du premier type pour lesquels une correspondance avec un canal de transport commun a été établie, au moins un identifiant de canaux logiques communs étant attribué aux unités de données ; et
traiter les unités de données reçues conformément au(x) identifiant(s) de canaux logiques communs,
dans lequel les deux ou plus de deux canaux logiques communs du premier type sont des canaux logiques communs identiques transférant le même type d'informations,
dans lequel les deux ou plus de deux canaux logiques communs du premier type sont des Canaux de Trafic Multidestinataire (MTCH), et
dans lequel le canal de transport commun est un Canal d'Accès dans le sens Descendant (FACH).

6. Procédé selon la revendication 5, les unités de données des canaux logiques communs ont été multiplexées pour le canal de transport commun dont la correspondance avec ceux-ci a été établie.

7. Procédé selon la revendication 5, dans lequel l'étape de traitement comporte en outre :
un contrôle de l'identifiant de canaux logiques communs des unités de données reçues ;
un démultiplexage des unités de données reçues ; et
la fourniture de chaque unité de données démultiplexée à une couche supérieure via un canal logique commun désigné par l'identifiant de canaux logiques communs.

8. Procédé selon la revendication 5, dans lequel les étapes de réception et de traitement permettent la réception de multiples services multimédia de différentes Qualités de Services ou la réception de multiples flux de données de différentes QdS en un seul service multimédia.

9. Procédé selon la revendication 1 ou 5, dans lequel les unités de données sont liées à un ou plusieurs services multimédia qui utilisent un service support point à multipoint.

10. Procédé selon la revendication 1 ou 5, dans lequel le/les identifiant(s) de canaux logiques communs est/sont dans un en-tête d'une unité de données correspondante.

11. Dispositif de réseau pour mettre en oeuvre un procédé d'émission de données dans un système de communication mobile, dans lequel il est possible de communiquer des unités de données sur différents types de canaux logiques communs, au moins deux des canaux logiques communs étant d'un premier type, le dispositif comprenant :
une couche de gestion des ressources radio (RRC), une couche de liaison radio (RLC), une couche de contrôle d'accès au support (MAC) et une couche physique (PHY), la couche RLC et la couche MAC ayant entre elles des canaux logiques, la couche MAC et la couche PHY ayant entre elles des canaux de transport, et la couche PHY ayant des canaux physiques associés à celle-ci, et la couche RRC, la couche RLC, la couche MAC et la couche PHY étant conçues pour et coopérant pour exécuter les étapes consistant à
établir une correspondance entre deux ou plus de deux canaux logiques communs du premier type et un canal de transport commun avec attribution d'au moins un identifiant de canaux logiques communs à des unités de données des deux ou plus de deux canaux logiques communs du premier type ; et
transmettre, via le canal de transport commun, les unités de données auxquelles est/sont attribué(s) le/les identifiant(s) de canaux logiques communs,
dans lequel les deux ou plus de deux canaux logiques communs du premier type sont des canaux logiques communs identiques transmettant le même type d'informations,
dans lequel les deux ou plus de deux canaux logiques communs du premier type sont des Canaux de Trafic Multidestinataire (MTCH), et
dans lequel le canal de transport commun est un Canal d'Accès dans le sens Descendant (FACH).

12. Dispositif selon la revendication 11, dans lequel l'étape d'établissement de correspondance comporte en outre :
le multiplexage des unités de données des canaux logiques communs pour le canal de transport commun dont la correspondance avec ceux-ci a été établie.

13. Dispositif selon la revendication 12, conçu pour émettre sur un canal physique les unités de données transférées, les canaux logiques communs pouvant être distingués grâce à l'identifiant/aux identifiants de canaux logiques communs attribué(s) à celles-ci.

14. Dispositif selon la revendication 13, dans lequel les étapes d'établissement de correspondance, de transmission et d'émission permettent l'émission de multiples services multimédia à Qualités de Services différentes ou l'émission de multiples flux de données à QdS différentes en un seul service multimédia.

15. Dispositif pour équipement utilisateur, servant à exécuter un procédé de réception de données dans un système de communication mobile, dans lequel il est possible de communiquer des unités de données sur différents types de canaux logiques communs, au moins deux des canaux logiques communs étant d'un premier type, le dispositif comprenant :
une couche de gestion des ressources radio (RRC), une couche de liaison radio (RLC), une couche de contrôle d'accès au support (MAC) et une couche physique (PHY), la couche RLC et la couche MAC ayant entre elles des canaux logiques, la couche MAC et la couche PHY ayant entre elles des canaux de transport, et la couche PHY ayant des canaux physiques associés à celle-ci, et la couche RRC, la couche RLC, la couche MAC et la couche PHY étant conçues pour et coopérant pour exécuter les étapes consistant à
recevoir des unités de données présentes sur deux ou plus de deux canaux logiques communs du premier type pour lesquels une correspondance avec un canal de transport commun a été établie, au moins un identifiant de canaux logiques communs étant attribué aux unités de données ; et
traiter les unités de données reçues conformément au(x) identifiant(s) de canaux logiques communs,
dans lequel les deux ou plus de deux canaux logiques communs du premier type sont des canaux logiques communs identiques transférant le même type d'informations,
dans lequel les deux ou plus de deux canaux logiques communs du premier type sont des Canaux de Trafic Multidestinataire (MTCH), et
dans lequel le canal de transport commun est un Canal d'Accès dans le sens Descendant (FACH).

16. Dispositif selon la revendication 15, dans lequel les unités de données des canaux logiques communs ont été multiplexées pour le canal de transport commun dont la correspondance avec ceux-ci a été établie.

17. Dispositif selon la revendication 15, dans lequel l'étape de traitement comporte en outre :
un contrôle de l'identifiant de canaux logiques communs des unités de données reçues ;
un démultiplexage des unités de données reçues ; et
la fourniture de chaque unité de données démultiplexée à une couche supérieure via un canal logique commun désigné par l'identifiant de canaux logiques communs.

18. Dispositif selon la revendication 13 ou 17, dans lequel les unités de données sont liées à un ou plusieurs services multimédia qui utilisent un service support point à multipoint.

19. Dispositif selon la revendication 11 ou 15, dans lequel le/les identifiant(s) de canaux logiques communs est/sont dans un en-tête d'une unité de données correspondante.

20. Procédé selon la revendication 1 ou 5, dans lequel un type des canaux logiques communs est un type parmi un type de canal de commande d'appel de terminal, un type de canal de contrôle de diffusion, un type de canal de contrôle commun et un type de canal de trafic commun.

21. Procédé selon la revendication 1 ou 5, dans lequel un identifiant de canal logique à champ (TCTF) de types de canaux destinataires sert à identifier un type de canal logique parmi différents types de canaux logiques communs.

22. Procédé selon la revendication 10, dans lequel l'unité de données correspondante est une unité (PDU) de données de protocole MAC (contrôle d'accès au support).

23. Procédé selon la revendication 10, dans lequel l'en-tête contient un identifiant de canal logique à champ (TCTF) de types de canaux destinataires servant à identifier un type de canal logique par différents types de canaux logiques communs.

24. Procédé selon la revendication 1 ou 5, dans lequel les canaux logiques communs transmettent différents types de données de transmission en continu, chaque donnée de transmission en continu ayant de préférence une qualité de service (QdS) différente.

25. Procédé selon la revendication 1 ou 5, dans lequel le/les identifiant(s) de canaux logiques communs est/sont attribué(s) par une couche de gestion de ressources radio (RRC).

26. Procédé selon la revendication 25, dans lequel la couche RRC est dans un réseau.

27. Dispositif selon la revendication 11 ou 15, dans lequel un type des canaux logiques communs est un type parmi un type de canal de commande d'appel de terminal, un type de canal de contrôle de diffusion, un type de canal de contrôle commun et un type de canal de trafic commun.

28. Dispositif selon la revendication 11 ou 15, dans lequel un identifiant de canal logique à champ (TCTF) de types de canaux destinataires sert à identifier un type de canal logique parmi différents types de canaux logiques communs.

29. Dispositif selon la revendication 19, dans lequel l'unité de données correspondante est une unité (PDU) de données de protocole MAC (contrôle d'accès au support).

30. Dispositif selon la revendication 19, dans lequel l'en-tête contient un identifiant de canal logique à champ (TCTF) de types de canaux destinataires servant à identifier un type de canal logique parmi différents types de canaux logiques communs.

31. Dispositif selon la revendication 11 ou 15, dans lequel les canaux logiques communs transmettent différents types de données de transmission en continu, chaque donnée de transmission en continu ayant de préférence une qualité de service (QdS) différente.

32. Dispositif selon la revendication 11 ou 15, dans lequel le/les identifiant(s) de canaux logiques communs est/sont attribué(s) par une couche de gestion de ressources radio (RRC).

33. Dispositif selon la revendication 32, dans lequel la couche RRC est dans un réseau.
